Europäisches Patentamt

European Patent Office

Office européen des brevets

(11) Veröffentlichungsnummer: **0 620 098 A1**

## (12) EUROPÄISCHE PATENTANMELDUNG

(21) Anmeldenummer: **94105422.3**

(22) Anmeldetag: **08.04.94**

(51) Int. Cl.5: **B29C 47/42**

(30) Priorität: **15.04.93 DE 4312249**

(43) Veröffentlichungstag der Anmeldung:
**19.10.94 Patentblatt 94/42**

(84) Benannte Vertragsstaaten:
**BE CH DE ES FR GB IT LI NL**

(71) Anmelder: **EMS-INVENTA AG**
**Selnaustrasse 16**
**CH-8001 Zürich (CH)**

(72) Erfinder: **Kaegi, Werner, Dipl.-Chem.-Ing. ETH**
**Burgstrasse 27**
**CH-7012 Felsberg (CH)**
Erfinder: **Schmidt, Gerhard, Dr.-Ing.**
**Via Caguils 16a**
**CH-7013 Domat/Ems (CH)**
Erfinder: **Ensinger, Joachim, Dipl.-Ing. TH**
**Schützenweg 14**
**CH-7430 Thusis (CH)**

(54) **Planetengetriebe für einen Mehrschneckenextruder sowie Mehrschneckenextruder dieses Planetengetriebe enthaltend.**

(57) Es wird ein Planetengetriebe für einen Mehrschneckenextruder vorgeschlagen, mit einem kreisförmigen, eine Innenverzahnung 1 aufweisenden ortsfesten Gehäuse 6, bei welchem das Sonnenzahnrad 2 aus wenigstens einem verzahnten Abschnitt einer Zentralspindel 8 und die Hauptplanetenzahnräder 3 aus wenigstens einem verzahnten freien Ende der Schnecke 9 gebildet sind, wobei die Hauptplanetenzahnräder 3 kreisförmig und zueinander sowie zum Sonnenrad 2 und zur Gehäuseinnenverzahnung 1 beabstandet angeordnet sind und zwischen dem Sonnenzahnrad 2 und den Hauptplanetenzahnrädern 3 einerseits und den Hauptplanetenzahnrädern 3 und der Gehäuseinnenverzahnung 1 andererseits mit diesen in Eingriff stehende, innere und äussere Zwischenplanetenzahnräder 4, 5 angeordnet sind.

Fig. 1

EP 0 620 098 A1

Die Erfindung betrifft ein Planetengetriebe für einen Mehrschneckenextruder, einen Mehrschneckenextruder mit einem solchen Planetengetriebe und ein Verfahren zur Verarbeitung bzw. Behandlung von hochviskosen Medien unter Verwendung eines solchen Mehrschneckenextruders.

Konventionelle Vorrichtungen zur Behandlung oder Herstellung von Kunststoffen in Schmelzephase sind z.B. stehend oder liegend angeordnete Behälter mit Rührwerken, Extruder mit ein oder zwei Wellen oder Dünnschichtapparate. Insbesondere bei hohen Viskositäten, d.h. in der Endstufe der Polymerherstellung, haben solche Einrichtungen aber einige bekannte Nachteile, wie schlechtes und ungleichmässiges Fliessverhalten (breite Verweilzeitverteilung), Produktablagerungen an Wänden, Deckel und in toten Ecken sowie langsame Reaktionsgeschwindigkeit v.a. bei Polykondensationsreaktionen wie z.B. der Polyesterherstellung, weil die verfügbare Oberfläche zur Freisetzung der niedrigmolekularen, gasförmigen Nebenprodukte sehr gering oder für das Vakuum schlecht zugänglich ist oder wenig erneuert wird.

Eine der ersten derartigen Vorrichtungen wird in der DE-PS 15 45 209 beschrieben. Ein liegender Reaktor mit mehreren parallelen, dicht ineinandergreifenden, eingängigen Schnecken mit gleichem Drehsinn, die bis über die Achse in einen Schmelzepool eingetaucht sind. Durch die Zwangsförderung können zwar Rückvermischungen und Ablagerungen im schmelzeberührten Teil des Reaktors vermieden werden, die spezifische Oberfläche des Schmelze-Sees und damit die Reaktionsgeschwindigkeit sind aber immer noch klein, und Ablagerungen von desublimierten Oligomeren am Deckel im Dampfraum des Reaktors können nicht verhindert werden.

Ein Fortschritt wurde mit dem mehrwelligen Knetscheibenreaktor gemäss der DE-PS 30 30 541 erreicht, bei welchem ebenfalls mehrere achsparallele, miteinander kämmende Schneckenwellen mit fördernden Knetscheiben kreisförmig um einen Entgasungsraum herum angeordnet sind, zu welchem hin sich auf den Schnecken dünne Filme der Polymerschmelze ausbilden. Die stationären Wellen werden alle einzeln durch das Gehäuse zum Getriebe geführt, was in der Praxis zu Schwierigkeiten mit der Abdichtung des Reaktionsraumes führt, wenn z.B. bei der Polyesterherstellung ein Feinvakuum von bis zu $10^{-4}$ bar gehalten werden muss. Die Abdichtung dieses Reaktortyps ist aber problematisch und fordert einen entsprechend grossen Aufwand.

Das Dichtungsproblem führte in der Folge zu Lösungsvorschlägen, bei denen nur noch eine Hauptantriebswelle durch die Gehäusewand geführt und abgedichtet werden musste.

Eine solche Vorrichtung ist in der EP-OS O 215 460 beschrieben. Es handelt sich dabei um einen vertikalen Dünnschichtapparat, in welchem mehrere Wellen an einem feststehenden zentralen Zahnrad planetenartig zum Abrollen gebracht werden, wodurch diese eine Umlauf- und dazu gleichsinnige Rotationsbewegung ausführen und an der Zylinderinnenwand mit hoher Relativgeschwindigkeit einen Schmelzefilm ausstreichen. Problematisch an diesem Apparat ist die einseitige Führung und reibungsarme Lagerung der Wellenenden in den mit der Antriebswelle verbundenen Lochscheiben. Die Wellen sind als gerillte Stangen ausgeführt, die einen gewissen Abstand zueinander haben. Im Vergleich zu kämmenden Schneckenwellen ist die Abreinigung erheblich schlechter und ein über den Querschnitt gleiches Förderverhalten - Voraussetzung für eine enge Verweilzeitverteilung - nicht sichergestellt.

Die gleichen Grundmerkmale von nur einer aus dem Gehäuse herausgeführten zentralen Antriebswelle und kreisenden Planetenwellen weist der Mehrschneckenextruder gemäss der DE-PS 40 01 986 auf. Mittels der im Getriebeteil schräg verzahnten Zentralspindel können die kreisförmig darum herum angeordneten Planetspindeln auf einfache Art angetrieben werden, indem sie ebenfalls schräg verzahnt sind und dadurch sowohl auf der Zentralspindel als auch in der Verzahnung der Gehäuse-Innenwand abrollen. Beim Drehen der Zentralspindel führen die Planetenwellen folglich eine Rotations- und gleichzeitig eine Umlaufbewegung an der Gehäuse-Innenwand aus. Zwischen den Planetwalzenabschnitten befinden sich miteinander kämmende Schnecken; die Gehäuseinnenwand und die zentrale Welle sind im Verfahrensabschnitt glatt. Aufgrund der geometrischen Verhältnisse im verzahnten Getriebeteil dieses Mehrschneckenextruders ist im Gegensatz zum in der EP-OS 0 215 460 beschriebenen Dünnschicht-Apparat der Rotationssinn der Planetenwellen gerade umgekehrt zum Umlaufsinn, was im Verfahrensabschnitt sowohl für die Gehäuseinnenwand als auch für die Oberfläche der drehenden Zentralwelle bedeutet, dass die Relativgeschwindigkeit der vorbeiziehenden Schneckenstege und somit auch deren Förderwirkung sehr klein ist. Im Vergleich zum mehrwelligen Knetscheibenreaktor der DE-PS 30 30 541 stellt die genannte Tatsache einen erheblichen Nachteil in Bezug auf Selbstreinigung und gleichmässiges Förderverhalten dar. Ausserdem sind Holdup und Oberflächenerneuerung - entscheidende Parameter bei diffusionskontrollierten Prozessen - nur schwer kalkulierbar.

Der vorliegenden Erfindung liegt die Aufgabe zugrunde, ein Planetengetriebe für einen Mehrschneckenextruder vorzuschlagen, durch welches bei dem entsprechenden Mehrschneckenextruder die Dichtungsprobleme des Verfahrensraums gering gehalten werden können und das zu behandelnde hochviskose Medium in allen Punkten des Verfahrensraums zwangsgefördert wird und eine optimale und möglichst grosse Oberflächenerneuerung erfährt.

Die Aufgabe wird durch Patentanspruch 1 bzw. 9 und 19 gelöst. Weitere, die Erfindung ausgestaltende Merkmale sind in den rückbezogenen Unteransprüchen enthalten.

Bei dem vorgeschlagenen Planetengetriebe sind zwei zusätzliche Kränze von inneren und äusseren Zwischenplanetenzahnrädern vorgesehen und zwar dergestalt, dass die Verzahnung der Hauptplanetenzahnräder nicht mehr direkt an der Gehäuseinnenverzahnung und am Sonnenzahnrad abrollt, sondern so, dass jedes Hauptplanetenzahnrad im Planetengetriebe zwischen zwei inneren und zwei äusseren Zwischenplanetenrädern angeordnet ist. Durch das vorgeschlagene Planetengetriebe führt ein Antrieb der zentralen Antriebswelle bzw. der Zentralspindel zu einer Rotation der Schneckenwellen, die gleichsinnig zum Umlaufsinn der Schneckenwellen im Extruder ist, wodurch sich insbesondere im Bereich zwischen den Schnecken und der Gehäuseinnenwand einerseits und den Schnecken und der Mantelfläche der Zentralspindel andererseits hohe Relativgeschwindigkeiten ergeben und damit eine Förderwirkung, gute Selbstreinigung und hohe Oberflächenerneuerung erzielt werden.

Die Anzahl der Hauptplanetenzahnräder und die der inneren und äusseren Zwischenplanetenzahnräder ist vorzugsweise identisch.

Mit Vorteil wird nur ein Zahnrad, nämlich das Sonnenzahnrad und somit die Zentralspindel angetrieben.

Bevorzugt sind die Zahnräder und die Gehäuseinnenverzahnung form- und kraftschlüssig ineinandergreifend ausgebildet.

Eine verbesserte Funktionsweise des Planetengetriebes ergibt sich dann, wenn sämtliche Zahnräder sowie die Gehäuseinnenverzahnung schrägverzahnt sind. Zur Aufhebung von axialen Reaktionskräften ist auch eine Pfeilverzahnung (Doppelschrägverzahnung) möglich.

Die bevorzugte Getriebeanordnung bringt es mit sich, dass die Querschnittsmittelpunkte des Sonnenrads sowie eines jeden sich gegenüberliegenden Paares von inneren und äusseren Zwischenplanetenzahnrädern auf einem Strahl und die Querschnittsmittelpunkte der Hauptplanetenzahnräder auf der Winkelhalbierenden zwischen zwei solchen benachbarten Strahlen angeordnet sind.

Mit besonderem Vorteil sind die Zahnräder des Planetengetriebes sowie die Gehäuseinnenverzahnung produktgeschmiert. Das im Mehrschneckenextruder zu behandelnde Medium wird somit entweder durch das Getriebe hindurch in den Verfahrensraum eingebracht oder durch das Getriebe hindurch von dem Verfahrensraum in einen Austragsteil gefördert. Zwischen den Stirnflächen der Zahnräder, Wellen und Gehäusedeckel werden schmale Schmierspalten gebildet, in denen ein Film aus Behandlungsmedium die direkte Berührung verhindert. Dieser Schmierfilm wird stark geschert und stetig ausgetauscht.

Ein mit dem erfindungsgemässen Planetengetriebe versehener Mehrschneckenextruder weist ein Schmelze-Eintragsteil, wenigstens einen sich daran anschliessenden zylinderförmigen Verfahrensraum mit im Querschnitt kreisförmig angeordneten Schnecken, eine im Querschnitt mittig angeordnete Zentralspindel und einen sich an den Verfahrensraum anschliessenden Schmelze-Austragsteil auf, wobei zum Antrieb der Schnecken sowie der Zentralspindel das beschriebene Planetengetriebe vorgesehen ist. Es versteht sich dabei, dass ein solchermassen aufgebauter Mehrschneckenextruder auch mehrere hintereinanderliegende und miteinander in Verbindung stehende Verfahrensräume aufweisen kann.

Das Planetengetriebe kann am Anfang und/oder am Ende zumindest eines Verfahrensraums angeordnet sein.

Die Zentralspindel weist im Verfahrensraum vorzugsweise eine glatte Mantelfläche auf. Eine Sonderausführung besteht jedoch in einer im Verfahrensraum als Schnecke ausgebildeten Zentralspindel, die mit allen Planetenschnecken kämmt. In diesem Fall liegt ein kompaktes Scheckenbündel anstelle einer rein kreisförmigen Anordnung vor.

Die zur Förderung des zu behandelnden Mediums vorgesehenen Schneckenwellen sowie die Zentralspindel sind vorzugsweise achsparallel zueinander angeordnet.

Benachbarte Schneckenspindeln sind ineinandergreifend ausgebildet.

Die Abstände zwischen dem Aussenumfang der Schnecken und der Gehäuseinnenfläche einerseits sowie dem Mantel der Zentralspindel andererseits sind so gering wie möglich ausgebildet. Durch das enge bzw. sehr dichte Aneinanderliegen der einzelnen Teile im Verfahrensraum bei gleichzeitiger guter Zugänglichkeit für mögliches Vakuum in den offen Zwickeln können die angestrebten optimalen Eigenschaften des Mehrschneckenextruders geschaffen werden, wobei der Mehrschneckenextruder grundsätzlich zur kontinuierlichen Entgasung, Begasung, Mischung oder Herstellung von beispielsweise hochmolekularen Polymeren in Schmelzephase geeignet ist.

Bei dem Mehrschneckenextruder ist vorzugsweise lediglich die Zentralspindel angetrieben, wodurch sich die Antriebsvorrichtung und die Wellenabdichtung vereinfacht. Die Antriebswelle wird vorzugsweise nur durch eine der beiden Apparatestirnseiten eingeführt.

Vorzugsweise ist am Verfahrensraum ein Entgasungsdom angeordnet, um flüchtige Bestandteile wie Spaltprodukte, Monomere, Oligomere oder Lösungsmittelreste aus dem Verfahrensraum zu entfernen.

Zur Unterstützung der Entfernung der vorgenannten Produkte ist der Entgasunsdom mit Vorteil an eine Unterdruck erzeugende Vorrichtung angeschlossen.

Zur kontinuierlichen Verarbeitung hochviskoser Medien, insbesondere zur Behandlung von themoplastischen Kunststoffschmelzen oder zur Herstellung von thermoplastischen Kunststoffen, ist der vorgeschlagene Mehrschneckenextruder mit dem beschriebenen Planetengetriebe insbesondere geeignet.

Bei der Bearbeitung hochviskoser Medien werden diese im Verfahrensraum des Mehrschneckenextruders an dessen vorzugsweise glatten Gehäuseinnenwand und an der vorzugsweise glatten Mantelfläche der Zentralspindel sowie zwischen den Schnecken einer optimalen Oberflächenerneuerung, Selbstreinigung sowie einer Förderwirkung ausgesetzt.

Die hochviskosen Medien werden dabei verfahrensgemäss an der Gehäuseinnenwandung und an der Zentralspindel einer hohen Relativgeschwindigkeit ausgesetzt.

Durch Vakuumanlegen am Verfahrensraum können verfahrensgemäss flüchtige Bestandteile, bevorzugt Spaltprodukte, Monomer-, Oligomer- und Lösungsmittelreste, entfernt werden, wodurch das hochviskose Medium entgast wird.

Durch Einbringen zusätzlicher gasförmiger oder flüssiger Komponenten in den Eintragsteil oder in den Verfahrensraum können chemische oder physikalische Änderungen ausgeführt werden.

Verfahrensgemäss lassen sich mit dem Mehrschneckenextruder chemische Reaktionen oder Mischungsoperationen oder Compoundierungsvorgänge im Verfahrensraum ausführen.

Die dabei auftretenden chemischen Reaktionen können verfahrensgemäss Polymerisations-, Polykondensations- oder Polyadditionsreaktionen sein.

Verfahrensgemäss können die Polykondensationsreaktionen zur Herstellung von Polyestern, Polyamiden, Polycarbonaten, Polyarylaten, Polyamiden, Polyamidimiden sowie deren Copolymere dienen.

Verfahrensgemäss kann der Polyester Polyethylenterephthalat, Polybutylenterephthalat, Polyethylennaphthalat oder deren Copolymere sein.

Im folgenden wird die Erfindung anhand der beiliegenden zeichnerischen Darstellung vom Prinzip her noch näher erläutert. Es zeigen:

Fig. 1     einen Querschnitt durch einen Sektor des erfindungsgemässen Planetengetriebes und

Fig. 2     einen Längsschnitt durch einen mehrwelligen Extruder mit dem erfindungsgemässen Planetengetriebe an beiden Enden des Verfahresraums.

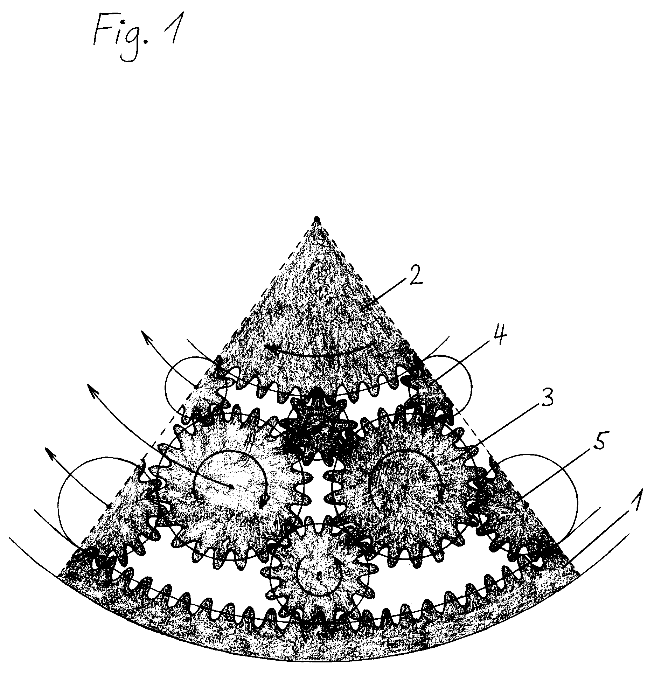

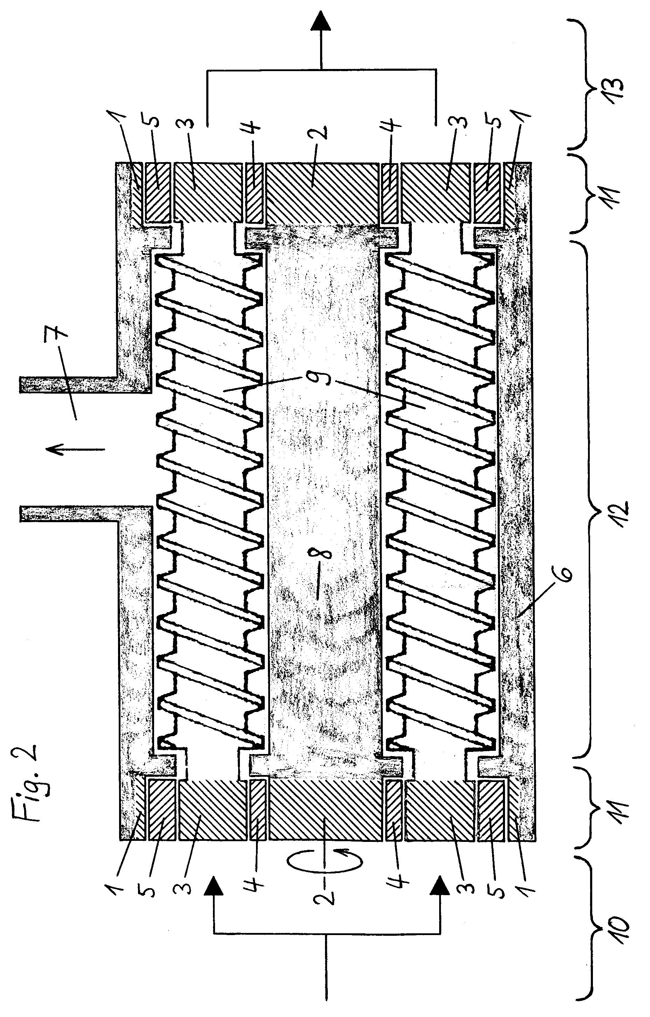

In Fig. 1 ist die erfindungsgemässe Konfiguration und Funktion des Planetengetriebes schematisch dargestellt. Das Planetengetriebe ist ein in sich geschlossenes, kreisförmiges Gebilde, von dem Fig. 1 lediglich einen Sektor zeigt. Fig. 2 zeigt den Längsschnitt durch den Verfahrensraum 12 des Mehrschneckenextruders, wobei das erfindungsgemässe Planetengetriebe am Anfang und am Ende des Verfahrensraums angeordnet ist. Nicht dargestellt, sondern bezugsziffernmässig nur angedeutet, sind der Schmelze-Eintragsteil 10 einerseits und der Schmelze-Austragsteil 13 andererseits.

Alle Zahnräder des Planetengetriebes, also das Sonnenzahnrad 2, die Hauptplanetenzahnräder 3 sowie die inneren und äusseren Zwischenplanetenzahnräder 4, 5 werden von der Gehäuseinnenverzahnung 1 eines drehfest montierten Gehäuses 6 eingefasst. Das Sonnenzahnrad 2 wird dabei vom verzahnten Abschnitt einer Zentralspindel 8 gebildet, ist also mit dieser fest verbunden.

In entsprechender Weise stellen die Hauptplanetenzahnräder 3 die freien Enden der Schnecken 9 dar. Im Zentrum angeordnet ist das Sonnezahnrad 2, welches wie alle anderen Zahnräder 3, 4 ,5 vorzugsweise schrägverzahnt ist, um neben dem Form- und Kraftschluss auch eine Förderwirkung auf die durch die Lücken hindurchtretende Polymerschmelze zu erzielen. Zwischen Gehäuseinnenverzahnung 1 und dem Sonnenzahnrad 2 befinden sich die Hauptplanetenzahnräder 3, die aber weder mit der Gehäuseinnenverzahnung 1 noch mit dem Sonnenzahnrad 2 in Eingriff stehen. Zwischen den Hauptplanetenzahnrädern 3 und dem Sonnenzahnrad 2 ist ein Kranz von inneren Zwischenplanetenzahnrädern 4 in das Getriebe eingefügt, welche für eine Gleichrichtung des Rotationssinnes der Hauptplanetenzahnräder 3, die untereinander gleichsinnig drehen, mit dem Sonnenzahnrad 2 sorgen. Für die translatorische Fortbewegung aller Hauptplanetenzahnräder 3 auf einer Umlaufbahn ist noch ein zweiter Kranz von äusseren Zwischenplanetenzahnrädern 5 angeordnet, welche das vom Sonnenzahnrad 2 ausgehende Antriebsmoment auf die feststehende Gehäuseinnenverzahnung 1 überträgt und sich und indirekt auch die anderen Hauptplanentenzahnräder 3 an der Gehäuseinnenverzahnung 1 in Umlaufrichtung abstossen. Beim Antrieb des Sonnenzahnrads 2 verschieben sich folglich alle Hauptplanetenzahnräder 3 in Richtung des Drehsinns des Sonnenzahnrads 2, wobei die Hauptplanetenzahnräder 3 gleichsinnig zu deren Umlaufsinn drehen. Alle Planetenzahnräder 3, 4 und 5 haben in bezug auf das Zentrum des Planetengetriebes die gleiche Winkelgeschwindigkeit, während die Winkelgeschwindigkeit des Sonnenzahnrads 2 wegen des Abrollvorgangs mindestens doppelt so gross ist.

Bei den vorgenannten Ausführungen versteht es sich, dass der Bewegungsablauf des Sonnenzahnrads 2 sowie der Hauptplanetenzahnräder 3 dem der im Verfahrensraum 12 angeordneten Zentralspindel 8 bzw. der Schnecken 9 entspricht. Es versteht sich ebenfalls, dass der Verfahrensraum 12 im Querschnitt kreisförmig ausgeführt ist und die Schnecken 9 kranz- bzw. kreisförmig um die mittig ausgerichtete Zentralspindel 8 angeordnet sind.

In bezug auf die Relativgeschwindigkeit zwischen der Ober- bzw. Mantelfläche einer Schneckenwelle 9 und der Gehäuseinnenwandung bzw. der Zentralspindelmantelfläche - vorstehend jeweils als Wand bezeichnet - gilt allgemein:

$$RG = UG + TG - WG$$

mit

RG = Relativgeschwindigkeit Schnecke/Wand
UG = Umfangsgeschwindigkeit der Schnecken (durch Rotation)
TG = Translationsgeschwindigkeit der Schnecken
WG = Wandgeschwindigkeit

Wenn man in erster Näherung vernachlässigt, dass die Durchmesserverhältnisse im Verfahrensraum 12 des Mehrschneckenextruders nicht genau mit denjenigen im Getriebe übereinstimmen müssen, so ergeben sich unter Verwendung des erfindungsgemässen Planetengetriebes annäherungsweise folgende Verhältnisse an den Annäherungspunkten Gehäuseinnenwand und der Zentralspindelmantelfläche, ausgedrückt in elementaren Geschwindigkeitseinheiten:

| Ort | UG | TG | WG | RG |
|---|---|---|---|---|
| Gehäuseinnenwand | 1 | 1 | 0 | 2 |
| Zentralspindelmantelfläche | -1 | 1 | 2 | -2 |

Man erhält also sehr hohe Relativgeschwindigkeiten, und zwar an der Innenwand des Gehäuses 6 und an der Mantelfläche der Zentralspindel 8, die jeweils von gleichem Betrag sind. Dieser Umstand stellt den wesentlichen Vorteil des vorgeschlagenen Mehrschneckenextruders mit dem erfindungsgemässen Planetengetriebe dar.

Entgegen der Darstellung in Fig. 2 kann bei einfachen, vertikal ausgerichteten Mehrschneckenextrudern das Getriebe auch nur auf einer Seite bzw. an einem Ende des Verfahrensraums 12 angeordnet sein. Vorzugsweise ist jedoch am Anfang sowie am Ende des Verfahrensraums 12 das erfindungsgemässe Planetengetriebe vorgesehen, um eine stabile Führung der Schnecken 9 zu erreichen. Die beiden Planetengetriebe aus Fig. 2 sind über die Zentralspindel 8 miteinander verbunden, wodurch ein synchroner Antrieb der beiden Planetengetriebe gewährleistet ist. Es genügt jedoch, die Antriebswelle nur durch eine der beiden Apparatestirnseiten einzuführen. Mit dem Entgasungsdom 7 ist angedeutet, dass der Verfahrensraum 12 des Mehrschneckenextruders auch entlüftet werden kann, wobei zur Abführung von flüchtigen Bestandteilen bzw. Spaltprodukten am Entgasungsdom 7 vorzugsweise eine Unterdruckvorrichtung angeschlossen werden kann.

Die Anzahl der im Verfahrensraum 12 dicht ineinandergreifenden Schnecken 9 kann im Prinzip ab einer gewissen Zahl und mit gewissen Einschränkungen frei gewählt werden. Es versteht sich dabei, dass die Spalte zwischen den einzelnen Schnecken 9 sowie die Spalte zwischen den Schnecken 9 und der Gehäuseinnenwandung sowie zwischen den Schnecken 9 und der Zentralspindel 8 möglichst gering gehalten werden, so dass sich die einzelnen Teile gerade nicht mehr berühren. Für jeden Anwendungsfall kann ein dazu passendes Planetengetriebe mit genauer Auslegung seiner Zahnräder konstruiert werden. Die Ausführung der Schnecken 9, d.h. deren Aufbau aus verschiedenen Elementen, deren Gängigkeit, deren Steigung, deren Verhältnis der Aussen-/Innendurchmesser ist in bezug auf das Planetengetriebe im Prinzip frei und richtet sich im wesentlichen nach verfahrenstechnischen Gesichtspunkten. Bei der Herstellung von hochmolekularen Produkten wie Polyester oder Polyamid durch Schmelzenachkondensation werden in dem vorgeschlagenen Mehrschneckenextruder vorzugsweise kleine Schneckensteigungen und/oder eingängige statt mehrgängige Schnecken gewählt, um trotz der infolge der hohen Relativgeschwindigkeit verstärkten Förderwirkung auf eine ausreichende Verweilzeit für den Viskositätsaufbau zu kommen.

Ein solcher Mehrwellenreaktor in der erfindungsgemässen Ausführung bringt die idealen Voraussetzungen mit, um z.B. als Endreaktor bei der Herstellung von Polyestern, wie z.B. Polyethylenterephthalat oder darauf basierenden Copolyestern mit hohen Viskositäten und tiefen Acetaldehydgehalten, eingesetzt zu werden.

Generell ist der erfindungsgemässe Mehrschneckenextruder zur Entgasung, Mischung und Herstellung von allen Polykondensaten geeignet, d.h. neben Polyestern, wie z.B. Polyethylenterephthalat, Polybutylenterephthalat, Polyethylennaphthalat, auch für Polyamide, Polycarbonate, Polyarylate, Polyamine, Polyamidimide und andere Kondensationspolymere.

Weitere Anwendungen sind denkbar zur Entgasung (Entfernung von Lösungsmitteln, Monomeren und Oligomeren), zum Einbringen zusätzlicher gasförmiger oder flüssiger Komponenten für chemische oder physikalische Veränderungen des Mediums (wie z.B. Abbaureaktionen oder Stripping), zur Mischung oder Compoundierung von anderen Polymeren wie Polyolefinen (v.a. Polyethylen), Polystyrol (und darauf basierenden Copolymeren), Polymethylmethacrylat oder auch Bio-Polymeren (z.B. auf Stärkebasis).

Anwendungsmöglichkeiten sind auch ausserhalb des eigentlichen Kunstoffbereichs, z.B. für hochviskose Flüssigkeiten oder Pasten in diversen Industriezweigen, denkbar.

**Bezugszeichenliste**

| | |
|---|---|
| 1 | Gehäuseinnenverzahnung |
| 2 | Sonnenzahnrad |
| 3 | Hauptplanetenzahnräder |
| 4 | Zwischenplanetenzahnräder, innen |
| 5 | Zwischenplanetenzahnräder, aussen |
| 6 | Gehäuse |
| 7 | Entgasungsdom |
| 8 | Zentralspindel |
| 9 | Schnecken |
| 10 | Schmelze-Eintragsteil |
| 11 | Getriebe |
| 12 | Verfahrensraum |
| 13 | Schmelze-Austragsteil |

**Patentansprüche**

1. Planetengetriebe für einen Mehrschneckenextruder mit einem kreisförmigen, eine Innenverzahnung (1) aufweisenden ortsfesten Gehäuse (6), bei welchem das Sonnenzahnrad (2) aus wenigstens einem verzahnten Abschnitt einer Zentralspindel (8) und die Hauptplanetenzahnräder (3) aus wenigstens einem verzahnten freien Ende der Schnecken (9) gebildet sind, wobei die Hauptplanetenzahnräder (3) kreisförmig und zueinander sowie zum Sonnenrad (2) und zur Gehäuseinnenverzahnung (1) beabstandet angeordnet sind und zwischen dem Sonnenzahnrad (2) und den Hauptplanetenzahnrädern (3) einerseits und den Hauptplanetenzahnrädern (3) und der Gehäuseinnenverzahnung (1) andererseits mit diesen in Eingriff stehende, innere und äussere Zwischenplanetenzahnräder (4, 5) angeordnet sind.

2. Planetengetriebe nach Anspruch 1, bei welchem die Anzahl der Hauptplanetenzahnräder (3) und die der inneren und äusseren Zwischenplanetenzahnräder (4, 5) identisch ist.

3. Planetengetriebe nach Anspruch 1 oder 2, bei welchem das Sonnenzahnrad (2) angetrieben ist.

4. Planetengetriebe nach einem der Ansprüche 1 bis 3, bei welchem die Zahnräder (2, 3, 4, 5) und die Gehäuseinnenverzahnung (1) form- und kraftschlüssig ineinandergreifend ausgebildet sind.

5. Planetengetriebe nach einem der Ansprüche 1 bis 4, bei welchem die Zahnräder (2, 3, 4, 5) sowie die Gehäuseinnenverzahnung (1) schrägverzahnt ausgebildet sind.

6. Planetengetriebe nach einem der Ansprüche 1 bis 5, bei welchem die Zahnräder (2, 3, 4, 5) sowie die Gehäuseinnenverzahnung (1) pfeilverzahnt ausgebildet sind.

7. Planetengetriebe nach einem der Ansprüche 1 bis 6, bei welchem die Querschnittsmittelpunkte des Sonnenzahnrads (2) sowie eines jeden sich gegenüberliegenden Paares von inneren und äusseren Zwischenplanetenzahnrädern (4, 5) auf einem Strahl und die Querschnittsmittelpunkte der Hauptplanetenzahnräder (3) auf der Winkelhalbierenden zwischen zwei solchen benachbarten Strahlen angeordnet sind.

8. Planetengetriebe nach einem der Ansprüche 1 bis 7, bei welchem dessen Zahnräder (2, 3, 4, 5), die Gehäuseinnenverzahnung (1) und alle Stirnflächen von rotierenden Teilen produktgeschmiert sind.

9. Mehrschneckenextruder zur kontinuierlichen Verarbeitung von hochviskosen Medien, insbesondere zur Behandlung von thermoplastischen Kunststoff-Schmelzen oder zur Herstellung von thermoplastischen Kunststoffen mit einem Schmelze-Eintragsteil (10), wenigstens einem sich daran anschliessenden zylinderförmigen Verfahrensraum (12) mit im Querschnitt kreisförmig angeordneten Schnecken (9), einer im Querschnitt mittig angeordneten Zentralspindel (8) und einem sich daran anschliessenden Schmelze-Austragsteil (13), bei welchem wenigstens ein Planetengetriebe nach einem der vorherigen Ansprüche zum Antrieb der Schnecken (9) sowie der Zentralspindel (8) vorgesehen ist.

10. Mehrschneckenextruder nach Anspruch 9, bei welchem das Planetengetriebe am Anfang und/oder am Ende des Verfahrensraums (12) angeordnet ist.

11. Mehrschneckenextruder nach Anspruch 9 oder 10, bei welchem die Zentralspindel (8) im Verfahrensraum (12) eine glatte Mantelfläche aufweist.

12. Mehrschneckenextruder nach Anspruch 9 oder 10, bei welchem die Zentralspindel (8) im Verfahrensraum (12) als Schnecke ausgebildet ist.

13. Mehrschneckenextruder nach einem der Ansprüche 8 bis 10, bei welchem die Schneckenwelle (9) und die Zentralspindel (8) achsparallel angeordnet sind.

14. Mehrschneckenextruder nach einem der Ansprüche 9 bis 13, bei welchem benachbarte Schnecken ineinandergreifend ausgebildet sind.

15. Mehrschneckenextruder nach einem der Ansprüche 9 bis 14, bei welchem der Abstand zwischen dem Aussenumfang der Schnecken (9) und der Gehäuseinnenfläche einerseits und dem Mantel der Zentralspindel (8) andererseits maximal gering ausgebildet ist.

16. Mehrschneckenextruder nach einem der Ansprüche 9 bis 15, bei welchem die Zentralspindel (8) angetrieben ist.

17. Mehrschneckenextruder nach einem der Ansprüche 9 bis 16, bei welchem am Verfahrensraum (12) ein Entgasungsdom (7) angeordnet ist.

18. Mehrschneckenextruder nach einem der Ansprüche 9 bis 17, bei welchem eine Unterdruckvorrichtung am Entgasungsdom (7) angeschlossen ist.

19. Verfahren zur kontinuierlichen Verarbeitung hochviskoser Medien, insbesondere zur Behandlung von thermoplastischen Kunststoff-Schmelzen oder zur Herstellung von thermoplastischen Kunststoffen unter Verwendung eines Mehrschneckenextruders nach einem der Ansprüche 9 bis 18.

20. Verfahren nach Anspruch 19, bei welchem das hochviskose Medium im Verfahrensraum (12) des Mehrschneckenextruders an dessen Gehäuseinnenwand, an der Zentralspindel (8) und zwischen den Schnecken (9) eine Scherung, einer Oberflächenerneuerung sowie einer Förderwirkung ausgesetzt wird.

21. Verfahren nach Anspruch 19 oder 20, bei welchem das hochviskose Medium an der Gehäuseinnenwand und an der Zentralspindel (8) einer hohen Relativgeschwindigkeit ausgesetzt wird.

**22.** Verfahren nach einem der Ansprüche 19 bis 21, bei welchem durch eine Entgasungsvorrichtung am Verfahrensraum (12) flüchtige Bestandteile, bevorzugt Spaltprodukte, Monomer-, Oligomer- und Lösungsmittelreste, entfernt, insbesondere entgast oder extrahiert werden.

**23.** Verfahren nach einem der Ansprüche 19 bis 22, bei welchem durch Einbringen zusätzlicher gasförmiger oder flüssiger Komponenten in den Eintragsteil (10) oder Verfahrensraum (12) chemische oder physikalische Veränderungen ausgeführt werden.

**24.** Verfahren nach einem der Ansprüche 19 bis 23, bei welchem im Verfahrensraum (12) chemische Reaktionen oder Mischungsoperationen oder Compoundierungsvorgänge ausgeführt werden.

**25.** Verfahren nach einem der Ansprüche 19 bis 24, bei welchem die chemischen Reaktionen Polymerisations-, Polykondensations- oder Polyadditionsreaktionen sind.

**26.** Verfahren nach einem der Ansprüche 19 bis 25, bei welchem die Polykondensationsreaktion die Herstellung von Polyestern, Polyamiden, Polycarbonaten, Polyarylaten, Polyamiden, Polyamidimiden sowie deren Copolymere umfasst.

**27.** Verfahren nach einem der Ansprüche 19 bis 26, bei welchem der Polyester Polyethylenterephthalat, Polybutylenterephthalat, Polyethylennaphthalat oder deren Copolymere ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| P,A | EP-A-0 588 008 (HERMANN BERSTORFF) <br> * das ganze Dokument * <br> --- | 1-27 | B29C47/42 |
| D,A | EP-A-0 440 888 (HERMANN BERSTORFF) <br> * das ganze Dokument * <br> --- | 1-27 | |
| D,A | EP-A-0 215 460 (TEIJIN LIMITED) <br><br> * das ganze Dokument * <br> --- | 1,3,4, 9-11, 17-27 | |
| A | PATENT ABSTRACTS OF JAPAN <br> vol. 13, no. 318 (M-852)19. Juli 1987 <br> & JP-A-01 105 036 (T K M ENG KK) 21. April 1989 <br> * Zusammenfassung * <br> ----- | 3-6 | |

**RECHERCHIERTE SACHGEBIETE (Int.Cl.5)**

B29C

Der vorliegende Recherchenbericht wurde für alle Patentansprüche erstellt

| Recherchenort | Abschlußdatum der Recherche | Prüfer |
|---|---|---|
| DEN HAAG | 1. Juni 1994 | Jensen, K |